# EUROPÄISCHE PATENTSCHRIFT

(11) **EP 1 361 970 B1**
(45) Veröffentlichungstag und Bekanntmachung des Hinweises auf die Patenterteilung: **01.12.2004**
(21) Anmeldenummer: 01949390.7
(22) Anmeldetag: 08.06.2001
(51) Int. Cl.: B60R 21/13

(54) **FAHRZEUGKÖRPER FÜR EIN PKW-CABRIOLET UND BAUEINHEIT**
VEHICLE BODY FOR A CABRIOLET AND MODULAR UNIT
CORPS DE VEHICULE POUR CABRIOLET ET MODULE

(30) Priorität: 20.02.2001 DE 20103001 U
(43) Veröffentlichungstag der Anmeldung: 19.11.2003
(73) Patentinhaber: Blechformwerke Bernsbach AG, 08315 Bernsbach (DE); ISE Innomotive Systems Europe GmbH, 51702 Bergneustadt (DE)
(72) Erfinder: MÜLLER, Hartwig, 09126 Chemnitz (DE)
(74) Vertreter: Grünecker, Kinkeldey, Stockmair & Schwanhäusser Anwaltssozietät
(86) Internationale Anmeldenummer: PCT/EP2001/006515
(87) Internationale Veröffentlichungsnummer: WO 2002/066295

(56) Entgegenhaltungen:
- DE-A- 19 826 672
- DE-A- 19 905 578
- US-A- 5 236 219

## Beschreibung

Die Erfindung betrifft einen Fahrzeugkörper gemäß Oberbegriff des Patentanspruchs 1 sowie eine Baueinheit gemäß Oberbegriff des Patentanspruchs 9.

Für einen aus DE 41 00 506 A (US 5 236 219 A) bekannten Cabriolet-Fahrzeugkörper mit oder ohne einer fest integrierten Trennwand wird zur Bestückung mit den beiden Überrollbügeln ein allseits geschlossener Rahmen verwendet, In den die Überrollbügel mit ihren Ausstattungskomponenten integriert sind. Diese Baueinheit wird an im Fahrzeugkörper vorgesehenen Anschlusspunkten montiert, wobei sich, falls eine fest integrierte Trennwand vorgesehen ist, der Rahmen an der Trennwand abstützen kann. Der Rahmen und die Trennwand beanspruchen im Fahrzeugkörper verhältnismäßig viel Platz und bedingen unzweckmäßig hohes Gewicht.

Aus DE 19905578A sind zwei verschiedene Vorgangsweisen bekannt Im einen Fall werden die beiden Überrollbügel mit ihren Ausstattungskomponenten in Gehäuseteilen an einer Trennwand vormontiert. Die mit den Überrollbügen bestückte Trennwand wird in den Pkw-Cabriolet-Fahrzeugkörper eingeschweißt. Im zweiten Fall ist die Trennwand Bestandteil des Pkw-Cabriolet-Fahrzeugkörpers. Sie wird nachträglich mit den beiden Überrollbügeln bestückt Jeder Überrollbügel wird mit einem Gehäuseteil und seinen Ausstattungskomponenten in einer Baueinheit vormontiert Beide Baueinheiten werden für sich an der Trennwand angebracht, und zwar an der den Sitzverankerungen zugewandten Seite der Trennwand. Die getrennte Anbringung der Baueinheiten erfordert eine sehr stabile Ausbildung der Trennwand mit platzraubenden schweren, oberen und unteren eingegliederten hohlen Modulträgern. Die Baueinheiten sind vielteilig und schwer. Ihre Montage ist aufwendig. Sie beanspruchen hinter den später eingebauten Fahrzeugsitzen unerwünscht viel Bauraum.

Der Erfindung liegt die Aufgabe zugrunde, einen Fahrzeugkörper der eingangs genannten Art sowie eine Baueinheit zum Ausstatten des Fahrzeugkörpers anzugeben, mit denen eine einfache Montage möglich ist und sich Bauraum und Gewicht sparen lässt.

Die gestellte Aufgabe wird mit den Merkmalen des Patentanspruchs 1 und des nebengeordneten Patentanspruchs 9 gelöst.

Der Modulträger bildet mit den beiden vormontierten, auf Funktion prüfbaren Überrollbügeln eine einzige Baueinheit, die leichtgewichtig ist und sich in einem Zug einbauen lässt. Der die beiden Überrollbügel enthaltende Modulträger ist eine sehr formstabile Struktur, die in eingebautem Zustand die Trennwand entscheidend aussteift. Dadurch kann die Trennwand selbst sehr einfach gestaltet sein. Die Montage der Baueinheit an die Rückseite der Trennwand ist vorteilhaft, weil dieser Bereich günstig zugänglich ist Hinter den Sitzverankerungen wird Platz gespart, da die Baueinheit vor der Trennwand keinen Einbauraum beansprucht. Außerdem ergeben sich wichtige optische Vorteile, weil die technische und statische Funktion des Modulträgers und der Überrollbügel an der Rückseite der Trennwand kaschiert und aus dem Blickbereich der Insassen verlagert ist, so dass dort keine das Gewicht erhöhenden und platzbeanspruchenden Abdeckungen oder Verkleidungen erforderlich sind.

Dank seiner hohen Formsteifigkeit und seines für die Formsteifigkeit wichtigen Volumens ist der Modulträger hervorragend zum Unterbringen weiterer Ausstattungskomponenten für den Fahrzeugkörper nutzbar.

Im Hinblick auf möglichst geringes Gewicht und hohe Formsteifigkeit ist der Modulträger ein U-Profil aus einem Faserverbundkunststoff, der aus thermisch pressgeformtem, mit thermoplastischem Kunststoff imprägnierten Glasfaser-Prepregs besteht. Der Faserverbundkunststoff bietet den unschätzbaren Vorteil, praktisch beliebige Formgestaltungen zuzulassen.

Auch die Überrollbügel und ggfs. sogar die Trennwand sollten aus diesem Faserverbundkunststoff bestehen, weil sich dadurch erheblich Gewicht einsparen lässt und dieses Material hervorragende Gleitflächen für die Bewegung der Überrollbügel hat.

Wenn der Modulträger über die Seitenränder der Trennwand hinaus verlängert und dort umgebogen ist, wird gut nutzbarer Einbauraum für weitere Ausstattungskomponenten geschaffen. Diese Ausbildung erhöht auch die Formsteifigkeit des Modulträgers und umgekehrt wieder der Trennwand und des Fahrzeugkörpers.

Da die Trennwand durch den Modulträger erheblich ausgesteift wird, kann sie ohne weiteres eine Durchgriffsöffnung enthalten, beispielsweise zum Durchladen oder für einen Skisack.

Alternativ oder additiv kann die Trennwand mit ihrer Unterseite sogar einen Abstand vom Boden des Fahrzeugkörpers einhalten, weil sie durch den Modulträger derart ausgesteift wird. Dies schafft eine Durchlademöglichkeit, wie sie bei Cabriolet-Fahrzeugkörpern normalerweise kaum zu realisieren ist.

Obwohl verschiedene Verbindungsarten zwischen dem Modulträger und der Trennwand nutzbar sind, bietet eine Schraubverbindung den Vorteil einer einfachen Montage und jederzeitigen Demontage.

Da zumeist Rückenlehnen von Fahrzeugsitzen gekrümmt verlaufen, sollte auch die Trennwand in Hochrichtung entsprechend gekrümmt sein, wie auch die Überrollbügel.

Ein wichtiger Gesichtspunkt für die Baueinheit ist ihre komplette Vormontage außerhalb des Fahrzeugkörpers, wobei alle Ausstattungskomponenten, sowohl für die Überrollbügel als auch für zusätzliche Fahrzeugfunktionen eingebaut und außerhalb des Fahrzeugkörpers auf Funktion überprüfbar sind. Dies vereinfacht und verkürzt die Montage beim Pkw-Hersteller. Gegebenenfalls erfolgt die Montage sogar vom Zulieferer.

Die Ausbildung des Modulträgers als U-Träger bringt bei geringem Gewicht hohe Formsteifigkeit, so dass die Trennwand im Fahrzeugkörper einfach ausgebildet werden kann.

Überrollbügel aus faserverstärktem Kunststoff mit längsorientierten, eingeformten Sicken lassen sich belastungsorientiert gestalten, bieten einen hohen Freiheitsgrad ihrer Form und sind extrem leicht. Zur Herstellung des Modulträgers und/oder der Überrollbügel werden Glasfaser-Prepregs mit einer thermoplastischen Kunststoffimprägnierung, vorzugsweise auf der Basis von Polypropylen, verwendet, die bei extrem geringem Gewicht belastungsorientiert ausgebildet sind und bereits von sich aus die zum Verstellen des jeweiligen Überrollbügels erforderlichen Gleit- oder Führungsflächen mit hervorragender Oberflächenqualität aufweisen.

Für die im Crashfall erforderliche Stabilität reicht es aus, wenn der in sich formstabile Modulträger in Hochrichtung niedriger ist als die Trennwand. Die Kräfte werden in die Trennwand eingeleitet, aber auch direkt in den Fahrzeugkörper, wobei der Modulträger die Steifigkeit und Belastbarkeit der an sich für solche Belastungen nicht geeigneten Trennwand schafft.

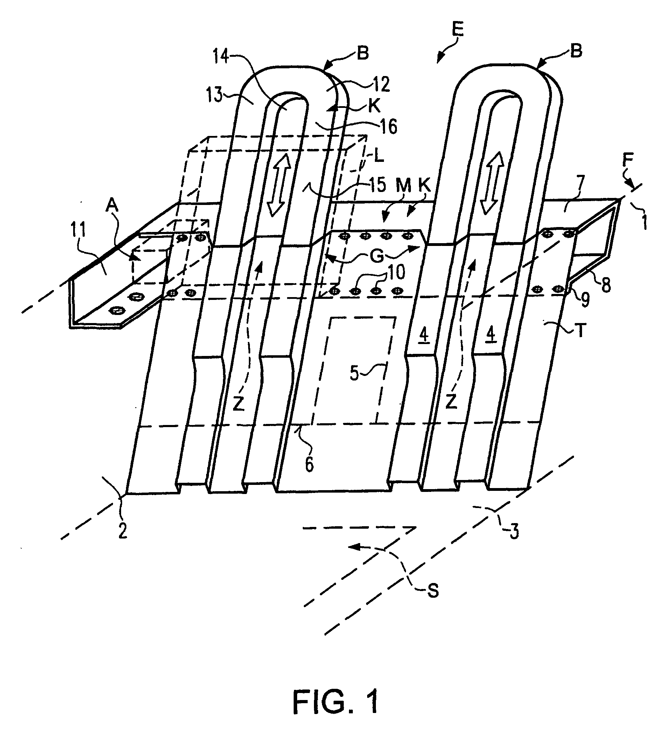

Anhand der Zeichnungen werden Ausführungsformen des Erfindungsgegenstandes erläutert. Fig. 1 zeigt eine Perspektivansicht eines Teils eines Fahrzeugkörpers.

In Fig. 1 ist perspektivisch ein Teil eines Fahrzeugkörpers F für ein Pkw-Cabriolet erkennbar, der Seitenwände 1, 2 und eine Bodenstruktur 3 besitzt. Zwischen den Seitenwänden 1, 2 und in Verbindung ggf. mit dem Boden 3 ist eine quer zur Fahrzeuglängsrichtung orientierte, sich über die Fahrzeugkörperinnenbreite erstreckende Trennwand T fest in den Fahrzeugkörper F integriert, z.B. eingeschweißt. Die Trennwand T kann nicht näher hervorgehobene, die Steifigkeit erhöhende Formstrukturierungen, wie Sicken oder dgl. aufweisen, und im gezeigten Fall paarweise aufwärts verlaufende Führungssicken 4 für jeweils die beiden Schenkel eines Überrollbügels B. Die Trennwand T kann aus Blech bestehen. Wegen zusätzlicher Gewichtseinsparung und des großen Freiheitsgrades bei der Verformung ist eine Trennwand T aus Faserverbundkunststoff, ähnlich oder gleich dem des Modulträgers M und/oder der Überrollbügel B, vorteilhaft.

Die beiden Überrollbügel B sind im Fahrzeugkörper in üblicher Weise auf- und ab- verstellbar, beispielsweise um im Fall eines Fahrzeugüberschlags schlagartig ausgefahren und verriegelt zu werden. Beide Überrollbügel B sind in eine Baueinheit E integriert, die aus den beiden Überrollbügeln B und einem in Fahrzeugquerrichtung verlaufenden formsteifen Modulträger M besteht. Diese Baueinheit E ist an der den gestrichelt angedeuteten Rückenlehnen L von in Sitzverankerungen S des Fahrzeugkörpers F anzuordnenden Fahrzeugsitzen abgewandten Rückseite der Trennwand T angebracht.

Da der montierte Modulträger M die Gestaltfestigkeit der Trennwand T erheblich erhöht und ggf. auch mit dem Fahrzeugkörper F verbunden ist, es durchaus möglich, in der Trennwand T einen Ausschnitt 5 freizulassen, der das Durchladen ermöglicht, oder den mit 6 bezeichneten unteren Rand der Trennwand im Abstand vom Boden 3 enden zu lassen.

Der Modulträger M ist als U-Träger 7 konzipiert. Seine U-Schenkel 8 bilden Befestigungseinrichtungen 9, die zu von der Rückseite der Trennwand T zugänglichen Befestigungseinrichtungen 10 der Trennwand passen, so dass sich die Baueinheit E an die Rückseite der fest in den Fahrzeugkörper F integrierten, z.B. eingeschweißten, Trennwand anbauen lassen. Im gezeigten Ausführungsbeispiel werden Schraubverbindungen zwischen dem Modulträger M und der Trennwand T vorgesehen. Es wäre aber auch denkbar, hier Nietverbindungen, Klebeverbindungen oder Schweißverbindungen bzw. Mischformen davon zu wählen.

Der Modulträger M ist ein integral aus Faserverbundkunststoff K geformter U-Träger mit die Führungssicken 4 zu einer kompletten Bügelführung ergänzenden, nicht näher hervorgehobenen Führungsstrukturen für die beiden Überrollbügel B. Unter Faserverbundkunststoff K wird hier ein Material verstanden, das aus mehreren Glasfaser-Prepregs in einem thermischen Pressverformungsverfahren verarbeitet wird, wobei die Glasfasern in den Prepregs ein Gewebe bilden, das in eine Kunststoffmatrix eines thermoplastischen Kunststoffes, z.B. Polypropylen, eingebunden ist.

In Fig. 1, rechts, schließt das Ende des Modulträgers M mit den Seitenrändern der Trennwand in etwa ab. In Fig. 1, linke Seite, sind Verlängerungsabschnitte 11 am Modulträger M angeformt, die winkelig um den Seitenrand der Trennwand T herumgreifen, den Modulträger M eine C-förmige Kontur verleihen, und zur Aufnahme weiterer Fahrzeugausstattungskomponenten A konzipiert sind, z.B. für Verdeckabstützungen oder Beschläge, Sicherheitsgurtmodule, od. dgl. Die Verlängerungsabschnitte 11 können mit dem Fahrzeugkörper F verbunden, z.B. , sein.

Auch die beiden Überrollbügel B, die untereinander gleich sind, bestehen aus Faserverbundkunststoff. Jeder Überrollbügel B ist wenigstens eine thermisch pressgeformte Schale 12 mit umgekehrt U-förmiger Außenkontur, zwei im wesentlichen parallelen Schenkeln und längsorientierten, eingeformten Sicken 13, 14, die belastungsorientiert konfiguriert sind. Die Sicken 13, 14 bilden Führungs- oder Gleitflächen 15 für den Überrollbügel B in den durch die Trennwand T und den Modulträger M gebildeten Führungen.

In der Baueinheit E aus dem Modulträger M und den beiden Überrollbügeln B sind ferner Zubehörkomponenten Z für die Überrollbügel untergebracht. Dies sind nicht näher hervorgehobene Antriebseinrichtungen, wie Federspeicher, Sensorikkomponenten zum Auslösen der Federspeicher, und Verriegelungen zum Positionieren der Überrollbügel in der eingezogenen und zum Verriegeln der Überrollbügel in der ausgefahrenen Stellung.

Die Baueinheit E aus dem Modulträger M mit den beiden Überroflbügeln B und den Zubehörteilen Z und A kann komplett vorgefertigt und getrennt von der Trennwand auf Funktion überprüft werden.

Bei der Montage des Fahrzeugkörpers wird die Baueinheit E von hinten her an der Rückseite der Trennwand T angebracht, wobei die Trennwand T den Gegebenheiten im Fahrzeugkörper entsprechend nahe hinter den Lehnen der Fahrzeugsitze platziert sein kann. In Fig. 1 ist angedeutet, dass die Trennwand T eine Krümmung in Hochrichtung aufweist, etwa in Anpassung an die Krümmung der Rückenlehnen L der Fahrzeugsitze. Auch die Schalen 12 der Überrollbügel B können entsprechend gekrümmt sein.

Alternativ ist es denkbar, den Modulträger M als Strangpress- oder Blechkantprofil aus Stahlblech oder Leichtmetall auszubilden. Des höheren Freiheitsgrades des Materialfaserverbundkunststoffes wegen ist diesem Material im Modulträger M jedoch der Vorzug zu geben.

Der Modulträger M kann im Fahrzeugkörper F gleichzeitig als eine Art Hutablage fungieren, ist jedoch dem direkten Einblick von Seiten der Fahrzeuginsassen entzogen. Aus Platz- und Gewichtsgründen beansprucht die Baueinheit E nur einen Teil der Höhe der Trennwand im Fahrzeugkörper F.

## Patentansprüche

1. Fahrzeugkörper (F) für ein Pkw-Cabriolet, der hinter Sitzverankerungen (S) eine quer zur Fahrzeuglängsrichtung verlaufende, fest in den Fahrzeugkörper integrierte Trennwand (T) aufweist, der im oberen Trennwandbereich ein quer zur Fahrzeuglängsrichtung orientierter, die Trennwand (T) aussteifender und sich über die Fahrzeugkörper-Innenbreite erstreckender Modulträger (M) zugeordnet ist, und an der zwei ausfahrbare Überrollbügel (B) im Bügelführungen (G) nebeneinander angeordnet sind, **dadurch gekennzeichnet, dass** der Modulträger (T) mit den beiden Überrollbügeln (B) eine getrennt von der Trennwand (T) vormontierte Baueinheit (E) ist, die an der den Sitzverankerungen (S) abgewandten Rückseite der Trennwand (T) montiert ist, und dass der Modulträger (M) die beiden Überrollbügel (B) an der Rückseite der Trennwand (T) positioniert und mit der Trennwand (T) die Bugelführungen (G) bildet.

2. Fahrzeugkörper nach Anspruch 1, **dadurch gekennzeichnet, dass** im Modulträger (M) integrierte Bügelverstell-, Arretier- und Sensorkomponenten (Z) enthalten sind.

3. Fahrzeugkörper nach Anspruch 1, **dadurch gekennzeichnet, dass** der Modulträger (M) ein U-Profil aus einem aus thermisch pressgeformten, mit thermoplastischem Kunststoff imprägnierten Glasfaser-Prepregs bestehenden Faserverbundkunststoff (K) ist.

4. Fahrzeugkörper nach Anspruch 1, **dadurch gekennzeichnet, dass** die beiden Überrollbügel (B) aus einem aus thermisch pressgeformten, mit thermoplastischem Kunststoff imprägnierten Glasfaser-Prepregs bestehenden Faserverbundkunststoff (K) gebildet sind.

5. Fahrzeugkörper nach Anspruch 1, **dadurch gekennzeichnet, dass** der Modulträger (M) mit über die Seitenränder der Trennwand (T) verlängerten, in Richtung zu den Sitzverankerungen (E) umgebogenen Abschnitten (11) ausgebildet ist, und dass in den Abschnitten (11) vormontierbare Fahrzeugkörper-Ausstattungen (A), wie Verdeckabstützungen, Sicherheitsgurt-Module od. dgl. vorgesehen sind.

6. Fahrzeugkörper nach Anspruch 1, **dadurch gekennzeichnet, dass** zwischen der Unterseite der Trennwand (T) und dem Boden (3) des Fahrzeugkörpers (F) ein Zwischenraum ausgespart ist.

7. Fahrzeugkörper nach Anspruch 1, **dadurch gekennzeichnet, dass** die Trennwand (T) in Hochrichtung eine Krümmung mit den Sitzverankerungen (S) zugewandter konkaver Krümmungsseite aufweist.

8. Fahrzeugkörper nach Anspruch 1, **dadurch gekennzeichnet, dass** die Trennwand (T) aus einem thermisch pressgeformten, mit thermoplastischem Kunststoff imprägnierten Glasfaser-Prepregs bestehenden Faserverbundkunststoff (K) hergestellt ist.

9. Baueinheit (E) für einen Pkw-Cabriolet-Fahrzeugkörper (F), mit wenigstens einem vormontierten Überrollbügel (B), wobei die Baueinheit (E) an einer im Fahrzeugkörper (F) fest integrierten, sich quer zur Fahrzeuglängsrichtung erstreckenden Trennwand (T) anbringbar ist, **dadurch gekennzeichnet, dass** die Baueinheit (E) einen über die Fahrzeugkörperinnenbreite durchgehenden, einstückigen Modulträger (M) und zwei nebeneinanderliegende vormontierte Überrollbügel (B) aufweist, dass die Überrollbügel (B) im Modulträger (M) mit in einer Modulträger-Vorderseite freiliegenden Vorderseiten vormontiert sind, und dass die Modulträger-Vorderseite zu an einer Rückseite der Trennwand (T) zugänglichen Befestigungseinrichtungen (10) passende Befestigungseinrichtungen aufweist.

10. Baueinheit nach Anspruch 9, **dadurch gekennzeichnet, dass** im Modulträger (M) weitere Fahrzeugkörper-Ausstattungskomponenten (A) ,wie Verdeckabstützungen und/oder Sicherheitsgurtmodule (A) vormontiert sind, vorzugsweise in seitlichen, C-förmig abknickenden Abschnitten (11) des Modulträgers (T).

11. Baueinheit nach Anspruch 9, **dadurch gekennzeichnet, dass** der Modulträger (M) ein U-Träger, vorzugsweise aus Faserverbundkunststoff, ist, dessen U-Schenkel (8) die Befestigungseinrichtungen aufweisen.

12. Baueinheit nach Anspruch 9, **dadurch gekennzeichnet, dass** der Überrollbügel (B) eine aus Faserverbundkunststoff pressgeformte Schale mit umgekehrt U-förmiger Außenkontur und längs zur U-Beuge orientierten, eingeformten Sicken (13, 14) ist.

13. Baueinheit nach Anspruch 9, **dadurch gekennzeichnet, dass** der Modulträger (M) und die Überrollbügel (B) jeweils aus integral pressverformten Glasfaser-Prepregs mit einer Thermoplastimprägnierung, vorzugsweise auf der Basis von Polypropylen, bestehen.

## Claims

1. Vehicle body (F) for a passenger car convertible, which, has a partition panel (T) behind the seat anchors (S), running crosswise to the longitudinal direction of the vehicle and permanently integrated in the vehicle body, to which, in the upper area of the partition panel, is assigned a module carrier (M), which is oriented crosswise to the longitudinal direction of the vehicle and which reinforces the partition panel (T) and which extends across the width of the interior of the vehicle body, and with two retractable roll bars (B) in bar guides (G) arranged on it next to one another, **characterised in that** the module carrier (M), with two roll bars (B), is a pre-mounted modular unit (E), separate from the partition panel (T), and is mounted on the back side of the partition panel (T) remote from the seat anchors (S), and that the module carrier (M) positions the two roll bars (B) on the back side of the partition panel (T) and, with the partition panel (T), forms the bar guides (G).

2. Vehicle body in accordance with Claim 1, **characterised in that** components for adjusting the bar, locking components and sensor components (Z) are integrated in the module carrier (M).

3. Vehicle body in accordance with Claim 1, **characterised in that** the module carrier (M) is a U-section made of a fibre-reinforced plastic (K), consisting of hot-press-formed glass-fibre prepregs, impregnated with thermoplastic plastic.

4. Vehicle body in accordance with Claim 1, **characterised in that** the two roll bars (B) are formed from a fibre-reinforced plastic (K), consisting of hot-press-formed glass-fibre prepregs, impregnated with thermoplastic plastic.

5. Vehicle body in accordance with Claim 1, **characterised in that** the module carrier (M) is formed from sections (11), which extend over the side edges of the partition panel (T) and are bent in the direction of the seat anchors (S), and that pre-mounted vehicle body equipment (A), such as supports for the top, seat belt modules or the like, are provided in the sections (11).

6. Vehicle body in accordance with Claim 1, **characterised in that** a space is reserved between the bottom side of the partition panel (T) and the floor (3) of the vehicle body (F).

7. Vehicle body in accordance with Claim 1, **characterised in that** the partition panel (T) is curved in the direction of the height, with the concave side of the curvature facing the seat anchors (S).

8. Vehicle body in accordance with Claim 1, **characterised in that** the partition panel (T) is manufactured from a fibre-reinforced plastic, (K), consisting of hot-press-formed glass fibre prepregs, impregnated with thermoplastic plastic.

9. Modular unit (E) for a vehicle body (F) of a passenger car convertible, with at least one pre-mounted roll bar (B), where the modular unit (E) can be attached to the partition panel (T) that is permanently integrated in the vehicle body (F) and that extends crosswise in the longitudinal direction of the vehicle, **characterised in that** the modular unit (E) has a one-piece module carrier (M), which continues across the width of the interior of the vehicle body, and two side-by-side, pre-mounted roll bars (B), that the roll bars (B) are pre-mounted in the module carrier (M) with front sides, which openly face a module carrier front side, and that the module carrier front side has mounting devices that match mounting devices (10), which are accessible on a back side of the partition panel (T).

10. Modular unit in accordance with Claim 9, **characterised in that** additional vehicle body equipment components (A), such as supports for the top and/or seat belt modules (A), are pre-mounted in the module carrier (M), preferably in C-shaped, bent side sections (11) of the module carrier (M).

11. Modular unit in accordance with Claim 9, **characterised in that** the module carrier (M) is a U-beam, preferably made of fibre-reinforced plastic, whose U-legs (8) are provided with the mounting devices.

12. Modular unit in accordance with Claim 9, **characterised in that** the roll bar (B) is a press-formed shell of fibre-reinforced plastic, with a reverse U-shaped external contour and formed ribs (13, 14) oriented along the length of the U-bend.

13. Modular unit in accordance with Claim 9, **characterised in that** the module carrier (M) and the roll bars (B) are both made of integrally press-formed glass-fibre prepregs with a thermoplastic impregnation, preferably on the basis of polypropylene.

## Revendications

1. Corps de véhicule (F) pour un cabriolet, qui présente derrière des ancrages de siège (S) une paroi de séparation (T) agencée transversalement à la direction longitudinale du véhicule et intégrée de façon fixe dans le corps du véhicule, à laquelle est attribué dans la zone supérieure de la paroi de séparation un support de module (M) orienté transversalement à la direction longitudinale du véhicule, renforçant la paroi de séparation (T) et s'étendant sur la largeur intérieure du corps de véhicule, et sur laquelle deux arceaux de sécurité (B) déployables sont disposés l'un à côté de l'autre dans des guides d'arceaux (G), **caractérisé en ce que** le support de module (M) avec les deux arceaux de sécurité (B) est un module (E) prémonté séparément de la paroi de séparation (T), qui est monté sur le côté arrière, opposé aux ancrages du siège (S), de la paroi de séparation (T) et **en ce que** le support de module (M) positionne les deux arceaux de sécurité (B) sur le côté arrière de la paroi de séparation (T) et forme avec la paroi de séparation (T) les guides d'arceaux (G).

2. Corps de véhicule selon la revendication 1, **caractérisé en ce que** des composants d'arceau, des composants d'arrêt et des composants de capteur (Z) intégrés sont inclus dans le support de module (M).

3. Corps de véhicule selon la revendication 1, **caractérisé en ce que** le support de module (M) est un profilé en U à base d'une matière synthétique renforcée par des fibres (K) composée de pré-imprégnés en fibre de verre formés par pressage thermique et imprégnés avec du plastique thermoplastique.

4. Corps de véhicule selon la revendication 1, **caractérisé en ce que** les deux arceaux de sécurité (B) sont formés à partir d'une matière synthétique renforcée par des fibres (4), composée de pré-imprégnés en fibre de verre formés par pressage thermique et imprégnés de plastique thermoplastique.

5. Corps de véhicule selon la revendication 1, **caractérisé en ce que** le support de module (M) est réalisé avec des parties (11) prolongées sur les bords latéraux de la paroi de séparation (T) et pliées en direction des ancrages du siège (E), et **en ce qu'**il est prévu des équipements du corps de véhicule (A) prémontables dans les parties (11), comme des supports de capote, des modules de ceinture de sécurité ou similaires.

6. Corps de véhicule selon la revendication 1, **caractérisé en ce qu'**un espace intermédiaire est évidé entre le côté inférieur de la paroi de séparation (T) et le fond (3) du corps de véhicule (F).

7. Corps de véhicule selon la revendication 1, **caractérisé en ce que** la paroi de séparation (T) présente dans la direction verticale une courbure avec un côté de courbure concave tourné vers les ancrages du siège (S).

8. Corps de véhicule selon la revendication 1, **caractérisé en ce que** la paroi de séparation (T) est fabriquée à base d'une matière synthétique renforcée par des fibres (K), composée de pré-imprégnés en fibre de verre formés par pressage thermique et imprégnés avec du plastique thermoplastique.

9. Module (E) pour un corps de véhicule de cabriolet (F), comprenant au moins un arceau de sécurité (B) prémonté, le module (E) pouvant être placé sur une paroi de séparation (T) intégrée de façon fixe dans le corps du véhicule (F), s'étendant transversalement à la direction longitudinale du véhicule, **caractérisé en ce que** le module (E) présente un support de module (M) traversant la largeur intérieure du véhicule et d'une seule pièce et deux arceaux de sécurité (B) prémontés et juxtaposés, **en ce que** les arceaux de sécurité (B) sont prémontés dans le support de module (M) avec des côtés avant dégagés dans un côté avant de support de module, et **en ce que** le côté avant du support de module présente des systèmes de fixation adaptés à des systèmes de fixation (10) accessibles sur un côté arrière de la paroi de séparation (T).

10. Module selon la revendication 9, **caractérisé en ce que** d'autres composants d'équipement du corps de véhicule (A), comme des supports de capote et/ou des modules de ceinture de sécurité (A), sont prémontés dans le support de module (M), de préférence dans des parties (11), latérales et pliant en forme de C, du support de module (T).

11. Module selon la revendication 9, **caractérisé en ce que** le support de module (M) est une poutre en U, de préférence à base de matière synthétique renforcée par des fibres, dont les branches en U (8) présentent des systèmes de fixation.

12. Module selon la revendication 9, **caractérisé en ce que** l'arceau de sécurité (B) est une coque formée par pressage à base de matière synthétique renforcée par des fibres avec un contour extérieur en forme de U inversé et des moulures (13, 14) orientées longitudinalement vers la flexion du U et formées à l'intérieur.

13. Module selon la revendication 9, **caractérisé en ce que** le support de module (M) et les arceaux de sécurité (B) se composent respectivement de pré-imprégnés en fibre de verre formés par pressage intégral avec une imprégnation de thermoplastique, de préférence à base de polypropylène.
